# Europäisches Patentamt

(19) **European Patent Office**

**Office européen des brevets**

(11) Publication number: **0 112 418**
**B1**

(12) # EUROPEAN PATENT SPECIFICATION

(45) Date of publication of patent specification: **11.03.87**

(21) Application number: **82306867.1**

(22) Date of filing: **22.12.82**

(51) Int. Cl.⁴: **G 02 B 1/10,** G 02 B 5/28, H 01 J 29/89

(54) Improved anti-reflection coating for visual display screens.

(43) Date of publication of application:
**04.07.84 Bulletin 84/27**

(45) Publication of the grant of the patent:
**11.03.87 Bulletin 87/11**

(84) Designated Contracting States:
**AT BE CH DE FR GB IT LI NL SE**

(56) References cited:
**DE-A-3 100 632**
**GB-A-1 289 487**
**US-A-3 421 811**

**Patent Abstracts of Japan vol. 5, no. 201, 19 December 1981**

(73) Proprietor: **International Business Machines Corporation**
**Old Orchard Road**
**Armonk, N.Y. 10504 (US)**

(72) Inventor: **Beeteson, John Stuart**
**14 Hookpit Farm Lane**
**Kingsworthy Winchester Hampshire (GB)**
Inventor: **Beanlands, Peter**
**13 Ashdown Close**
**Chandlers Ford Eastleigh Hampshire (GB)**

(74) Representative: **Blake, John**
**IBM United Kingdom Limited**
**Intellectual Property Department**
**Hursley Park Winchester Hampshire**
**SO21 2JN (GB)**

Courier Press, Leamington Spa, England.

## Description

This invention relates to an improved anti-reflection coating for visual display screens. The invention is applicable to many types of visual display unit apart from those employing cathode ray tubes such as head-up displays where an image is viewed on or behind a reflecting surface.

In recent years there has been increased emphasis on improving the ergonomics or "human factors" of visual display units (VDU's). In particular to reduce operator eye-strain and to increase character legibility and screen contrast, many attempts have been made to reduce reflections of ambient light from the screen surface. Although nylon meshes have been used and screens have been chemically etched to avoid a shiny surface, it is generally agreed that the most satisfactory treatment is that in which the front surface of the screen is coated with an anti-reflection coating consisting of various layers of cntrolled thicknesses and refractive indices. Prior attempts to solve reflection problems include UK Patent Nos 717,057, 1,289,487, 1,254,140 and 1,310,745, US Patent No 3,761,160 and European Patent Publication No 13,435.

Typically, it is now the conventional state of the art to coat the front surface of the display with an anti-reflective coating, adjusting the various operating parameters of the film deposition apparatus so that a desired reflectance characteristic is produced.

Until now it has been the assumption and practice that the measured or photometric reflectance should be below a maximum value over a wide range of frequencies corresponding essentially to the whole of the visible spectrum. Because of the need to maintain the reflectance below this maximum value over a wide band, it has not been possible to reduce this maximum easily or consistently.

We have discovered that in fact the operating parameters can be modified so that an improved anti-reflection coating can be obtained. This improvement arises from the realization that it is not important to reduce the photometric reflectance evenly over the whole of the visible spectrum. By taking into account the photopic response of the human eye, the reflectance requirements at the less sensitive part of the visible spectrum can be relaxed allowing a corresponding decrease in the reflectance at the more sensitive part of the visible spectrum. Because the bandwidth under consideration is narrower, the processing parameters can be more readily controlled to give a lower reflectance in that portion of the visible spectrum to which the eye is more sensitive.

This has the important advantage that for the same manufacturing yields a "better" anti-reflective coating (to the human observer) can be obtained or an increased manufacturing yield can be obtained with no decrease in the perceived efficiency of the anti-reflective coating.

According to one aspect of the invention, a method of fabricating an anti-reflective coating on the front viewing surface of a visual display unit comprises locating the surface in a deposition apparatus and adjusting the operating parameters of the apparatus so as to deposit on the surface a plurality of layers having controlled thicknesses and refractive indices so that the reflectance from said front surface is reduced within the visible spectrum, and is characterised in that the operating parameters are adjusted so that the photometric reflectance has a substantially inverse-photopic shape with its minimum value occurring substantially at the frequency of the maxima of the photopic luminosity curve.

According to another aspect of the invention, a visual display unit comprises a front viewing surface and an anti-reflective coating on the surface consisting of a plurality of layers of controlled refractive indices and thicknesses, and is characterised in that the coating has a photometric reflectance characteristic of substantially inverse-photopic shape with its minimum occurring substantially at the frequency of the maximum of the photopic luminosity curve.

The invention and its advantages will now be described, by way of example, with reference to the accompanying drawings, in which:—

Figure 1 is a view showing how ambient lighting affects the use of visual display unit;

Figure 2 shows basic parts of a typical visual display unit;

Figure 3 shows how the front viewing surface of the visual display unit can be provided with an anti-reflection coating;

Figure 4 is a typical photometric reflectance curve for a known coating;

Figure 5 shows photometric and photopic reflectance curves of an anti-reflection coating produced in accordance with the present invention;

Figure 6 shows the CIE photopic response curve;

Figure 7 shows the CIE chromaticity chart;

Figure 8 shows the spectral energy distribution of a typical cool white fluorescent light source;

Figure 9 is a three dimensional plot of the photopic luminance against colour for a cool white fluorescent light source showing process tolerance reflectance variations;

Figures 10 to 14 are graphs representing the photopic luminances for various light sources showing process tolerance reflectance variations;

Figure 15 is a graph representing photopic space;

Figures 16 to 18 are photopic space charts representing various anti-reflection coatings;

Figure 19 shows reflectance characteristic for an anti-reflection coating optimized for a colour display;

Figure 20 represents a practical realization of the optimum curve of Figure 19;

Figures 21 to 23 show theoretical reflectance curves needed to produce different flat photopic reflectance values;

Figure 24 is a graph comparing the energy distribution of flat and cool white fluorescent light source;

Figures 25 to 30 are plots showing the photometric and photopic reflectances for various photopic anti-reflection coatings for different light sources; and

Figure 31 is a similar plot to those of Figures 25, 27 and 29 but using a known anti-reflective coating for comparison purposes.

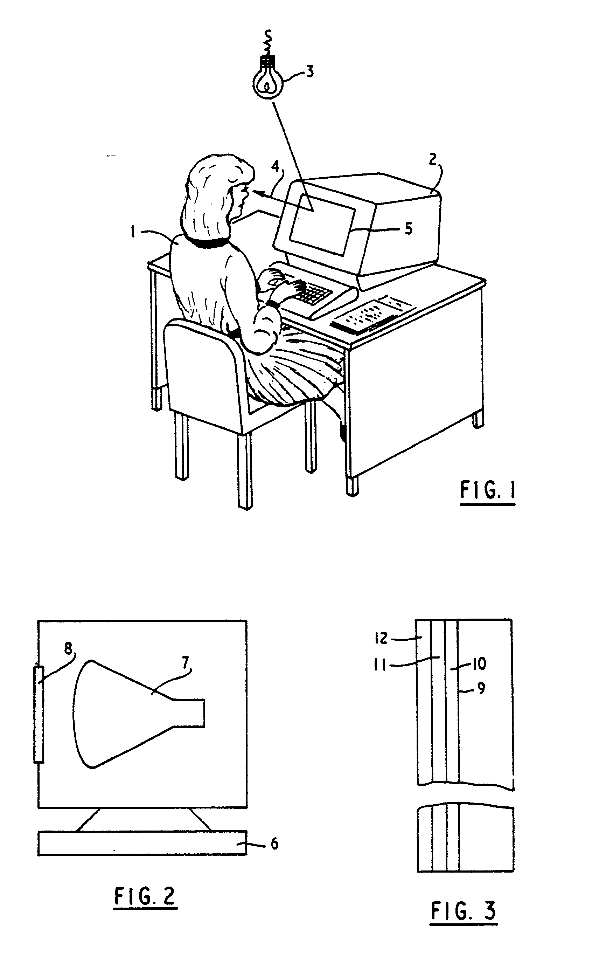

Figure 1 illustrates how ambient lighting conditions can affect an operator 1 using visual display unit 2. Light sources, represented symbolically by light bulb 3 but consisting of any artificial light fitting or windows, can give rise to annoying reflections 4 from the front viewing surface 5 of the visual display unit 2. It is not generally practical or desirable to operate visual display units in darkened environments and therefore the resultant light reflections can give operator eyestrain as well as decreasing the character legibility and screen contrast. To some extent the problem can be mitigated by careful positioning of the visual display unit and/or design of the ambient lighting. To aid in the positioning of the visual display unit, and as shown in Figure 2, the display can be mounted on a base mechanism 6 which allows tilting and/or rotation of the display.

However it has long been recognised that the problem is best mitigated if some kind of anti-reflection treatment is performed on the front viewing surface of the display. This front viewing surface might be the actual display device itself, for example cathode ray tube 7, or it might be a front panel 8 serving to protect the display device 7. Although not shown in Figure 2, the front panel could be bonded to the display device.

Although reflection can be reduced by etching or stippling the glass surface, it is generally agreed that with high quality displays in general and colour displays in particular, some kind of optical coating is required to reduce reflections. As shown in Figure 3, the glass surface 9 is coated with a number of layers 10, 11 and 12 as shown. The layers 10, 11 and 12 are deposited to such controlled thicknesses and with refractive indices such that reflection of light is reduced to very low values.

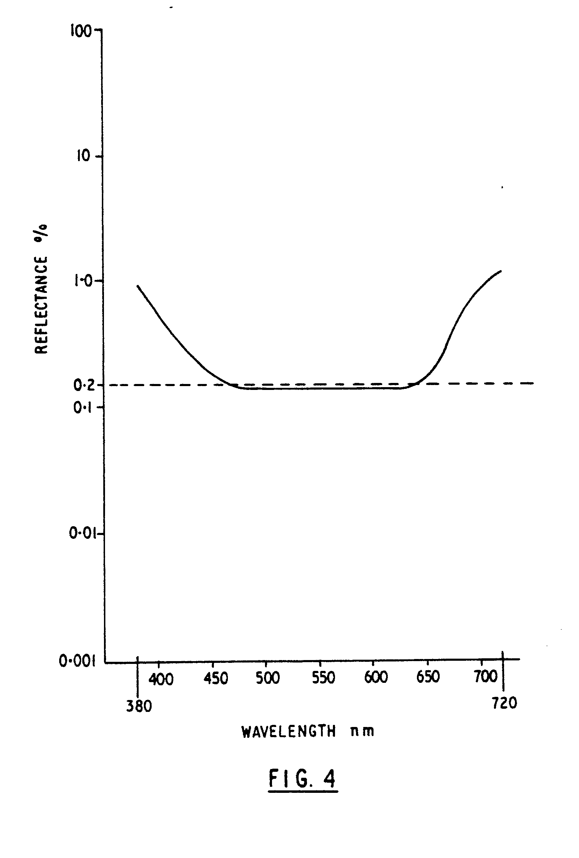

Figure 4 illustrates a reflectance curve for a typical known anti-reflection coating for a flat light source. The reflectance is the fraction of intensity reflected from the surface at a particular angle of incidence. As will be seen, the photometric reflectance is substantially flat over almost the whole of the visible spectrum. This is ensured by adjusting the various operating parameters (pressure, gas flow rates, chemical compositions and proportions, temperatures, deposition rates, etc) of the deposition apparatus in known manner. However because of the assumed need to maintain the level of the photometric reflectance over the whole of the visible spectrum, it has not previously been possible to reduce the reflectance values much lower than that illustrated. This is because there is a trade-off between the band-width and the level of the central minimum due to process tolerance variations. In other words the larger the bandwidth the higher the minimum and vice versa. Typically, the bandwidth expressed as the separation of the 3dB points divided by the centre frequency, is 44%.

Anti-reflective coatings have been known for many years. They were used first on camera and other optical lenses since with a multi-element lens, significant light transmission losses and flare can occur even if the reflectance at each element surface is low. We believe that the first anti-reflective coatings on visual displays units made use of the coating techniques previously developed for lenses even though there are no severe problems of light transmission or flare with visual display units.

We have now discovered that significant improvements in the performance of anti-reflective coatings on visual display units can be made. In view of the simple way in which this can be explained, it is surprising that in the many years of providing anti-reflection coatings on visual displays units, there has been no appreciation of our invention or its advantages. By adjusting the operating parameters of the deposition apparatus, a photometric reflectance characteristic having a substantially inverse photopic shape can be obtained. This effectively reduces the requirements at the edges of the visible spectrum and correspondingly allows a significantly lower photometric reflectance at the region of the spectrum to which the eye is most sensitive. The resultant photopic reflectance (that is the product of the photometric reflectance with the photopic luminosity curve) is substantially flat over the visible spectrum but at a significantly lower value than is possible using the prior art method where a flat photometric reflectance is desired.

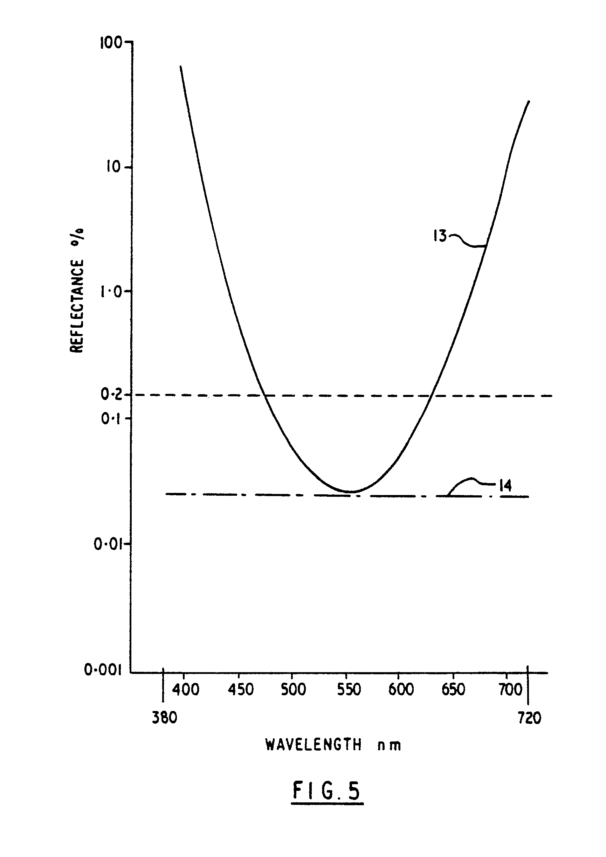

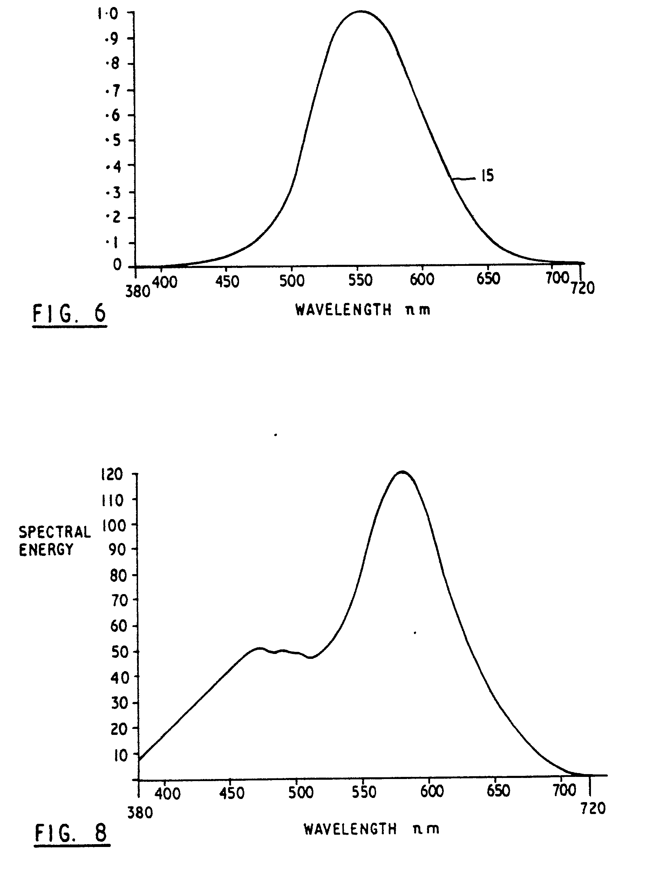

Figure 5 illustrates the inverse-photopic nature of the photometric reflectance (curve 13). Figure 6 illustrates the CIE (Commission Internationale d l'Eclairage or International Commission on Illumination) 1931 Standard observer photopic response curve 15. Curve 13 in Figure 5 is derived by dividing a desired flat photopic response 14 by curve 15 of Figure 6. It will be appreciated that the photopic response of individuals will vary slightly from the standard curve. However this variation is of negligible effect. It will also be apparent that the photometric reflectance curve need not be exactly the inverse of the photopic response curve and that some variation is possible. The photopic reflectance need not be perfectly flat. In practical coatings the reflectance at the edges of the visible spectrum will not normally rise as steeply as shown in curve 13 of Figure 5 leading to a reduction in the photopic reflectance in these areas.

Apart from the lower reflectance obtained by means of the present invention by narrowing the bandwidth but lowering the photometric reflectance at the photopic maximum, more consistent results are obtained. Thus with wide bandwidths with nominally flat photometric responses across the whole bandwidth, we have found photopic brightness variations nearly 10:1 from the best to worst coatings within the same nominal specification.

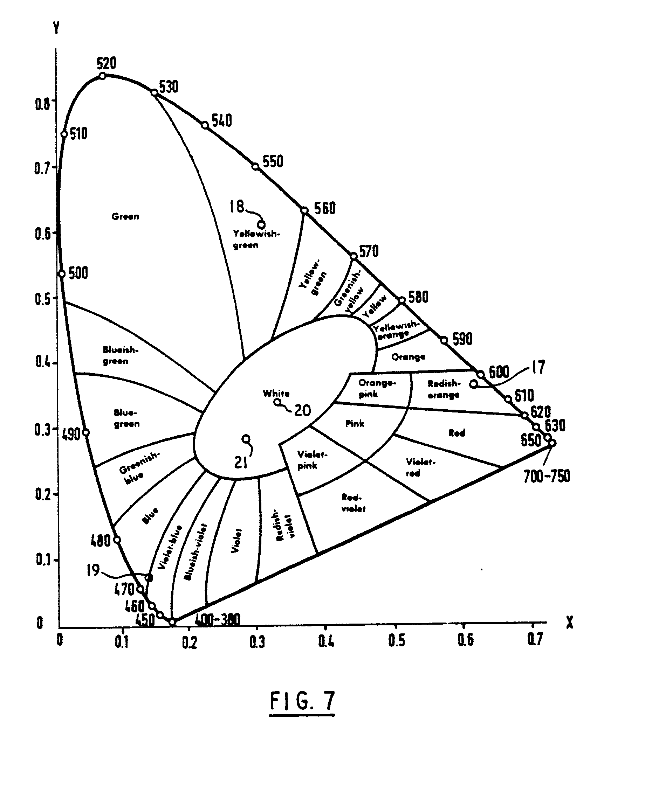

As shown in Figure 6, the human eye is much more sensitive in the yellow/green region (about 555 nm) of the spectrum than in the blue (about 450 nm) and the red (about 600 nm) and the invention in its basic form makes use of this fact. However in a refinement, a further factor can be taken into consideration, that is the spectral energy distribution of the ambient light. Figure 7 is the CIE chromaticity chart which shows the colour of light having various x and y values derived from the X, Y, Z tristimulus functions. The CIE chromaticity chart is well known so it will not be described in detail. Shown plotted on the chromaticity chart in Figure 7 are the chromaticities of the popular red, green and blue P22 phosphors 17, 18 and 19 respectively. In use, the ratio of the red, green and blue luminances is adjusted to give a combined result at a desired white chromaticity. Also shown on the chart are the chromaticities 20 and 21 of whites of 6500°K and 9300°K colour temperatures respectively which are popular settings for TV and visual display units.

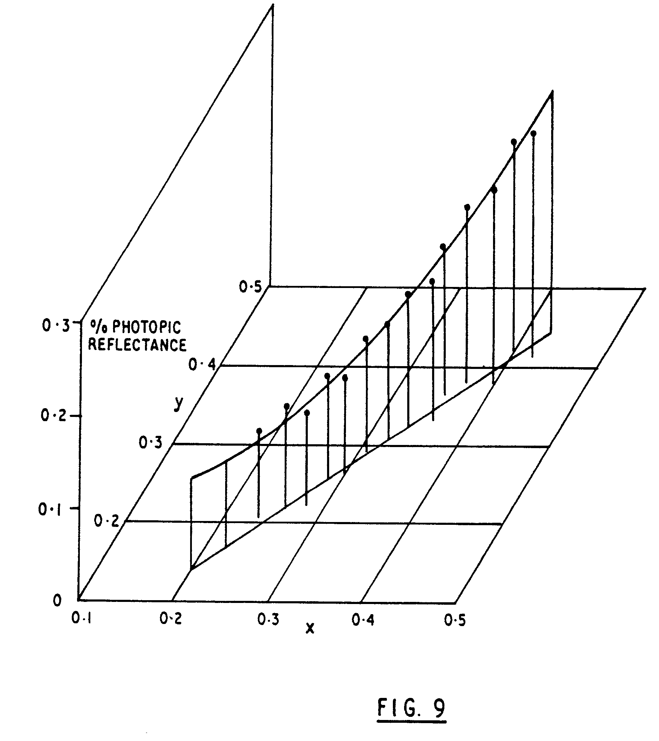

Figure 8 is a curve showing the spectral energy distribution of a typical cool white florescent lamp excluding the mercury lines at approximately 410, 430, 550 and 580 nm. Clearly with such a light source, there is less blue light that can be reflected but rather more yellow light. By shifting the minimum of the photometric reflectance of the anti-reflection coating towards the dominant wavelength, the coating can be tailored to give maximum effect for the particular ambient lighting.

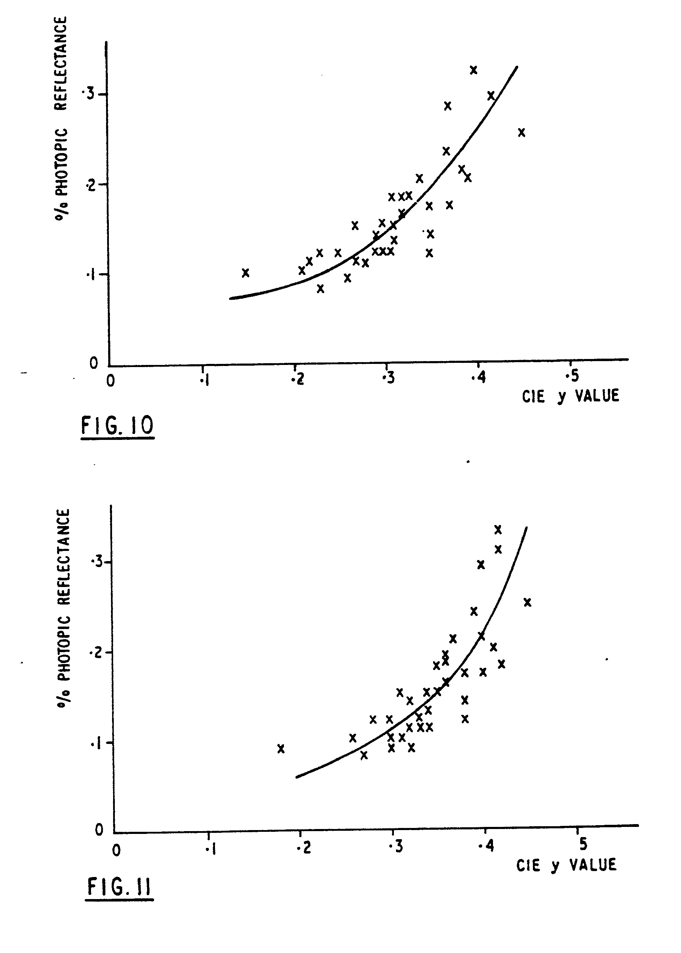

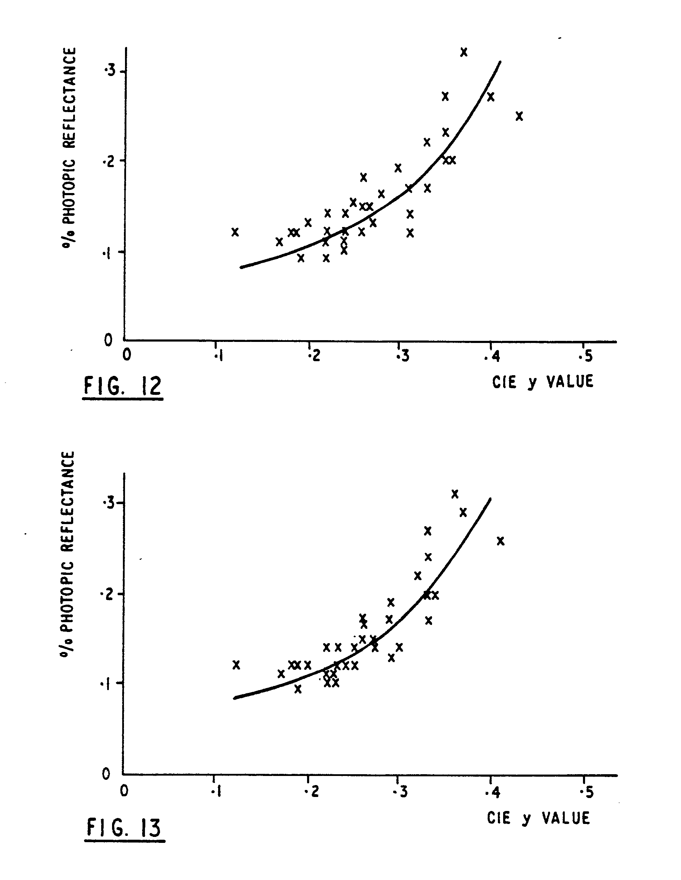

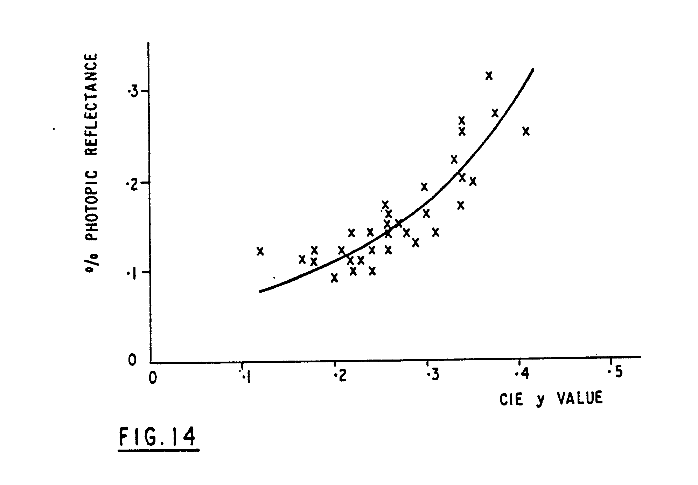

Figure 9 represents a three dimensional plot of the photopic reflectance and colour for a typical cool white fluorescent light source reflecting from a production tolerance spread of an anti-reflection coating in accordance with Figure 4, that is a conventional coating. The horizontal plane is the CIE x-y colour space whilst the vertical axis is the photopic reflectance. This shows that the locus of colour space movement is approximately a straight line. Similar diagrams for other light sources would show the same effect: the results are simplified in Figures 10 to 14 which show the photopic reflectance plotted against the CIE y value for cool white fluorescent, warm white fluorescent, daylight fluorescent, tungsten (2600°K) lamps and daylight (6500°K) respectively.

It will be seen that the different light sources give similar results. The major difference is that the colour of the observed reflection will vary due to the different spectral energy distributions. By shifting the minimum of the photometric reflectance towards the dominant wavelength found from the product of the light source spectral energy and curve 15 of Figure 6, the photopic reflectance for a particular light source may be minimised. A photopic reflectance which is flat would give a bluish-violet colour of reflection.

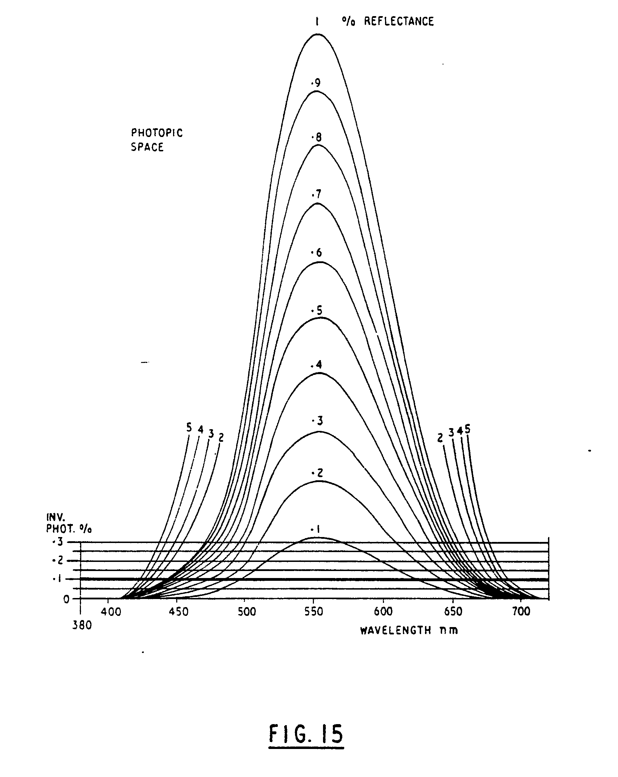

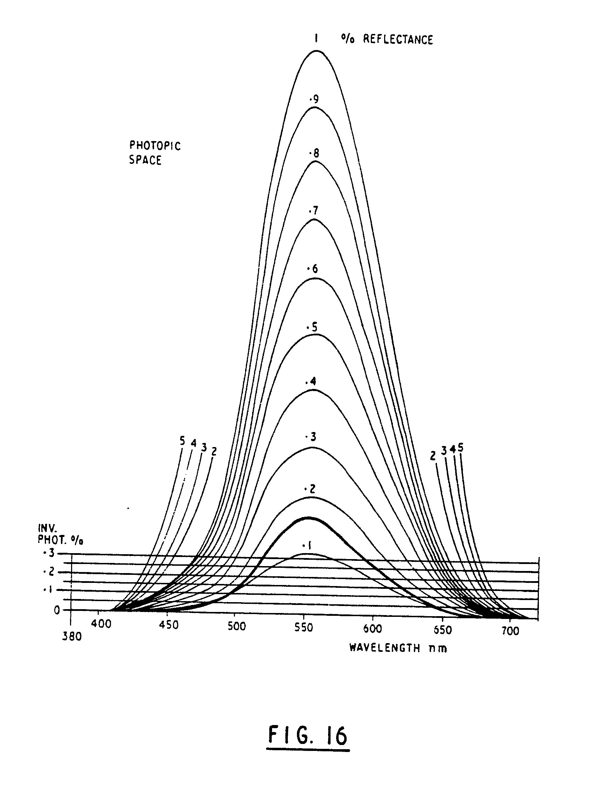

Figure 15 is a graph which allows direct graphical conversion of the photometric reflectance to photopic (human eye) response. The graph has scales which are plots of the response of the human eye versus wavelength, with a family of curves for different normalised luminances. These curves are overlaid with a vertical scale defined such that a photometric response following a horizontal line would appear equally bright at all wavelengths. To use the method, the reflectance of the coating is plotted for various wavelengths using the curve axes. The result is the reflectance as seen by the human eye. The vertical scale may now be used to assess the magnitude of the perceived reflection, the distribution across the wavelength giving a guide to its colour. Figure 15 shows a 0.1% Inverse-photopic coating plotted in this way. The advantage of this method lies in the immediacy with which the real performance of the coating becomes apparent. In contrast Figure 16 shows the plot for a known anti-reflective coating of 0.15% photometric reflectance. Figure 15 as shown represents the response to a flat input light source (illuminate E). Clearly similar curves can be constructed which include the effect of any particular light source.

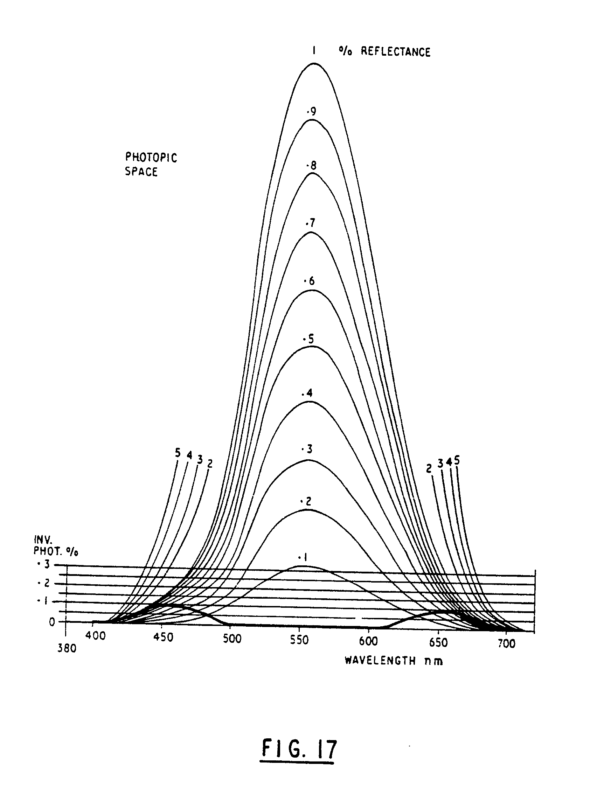

In a practical example, an anti-reflective coating was designed for the front viewing surface (of glass refractive index 1.52) of a visual display unit. The coating consisted of three layers corresponding to layers 10, 11 and 12 of Figure 3. The inner layer 10 consisted of an 82.4 nm thick layer of Silicon monoxide (SiO) of refractive index 1.70. The middle layer 11 consisted of 117 nm of cesium oxide ($CeO_2$) of refractive index 2.35 and the outer layer 12 consisted of 99.1 nm of magnesium fluoride ($MgF_2$) of refractive index 1.38. Figure 17 shows the computed performance of this coating plotted in photopic space.

So far the description has not considered the type of display device. However, where the display device is a colour cathode ray tube or other device using three phosphors, it may be desirable to take into account the different luminances of the three primary phosphors to obtain a specific white point. The photopic reflectance of the anti-reflection coating can be matched across the spectral band in the ratio of these luminances. Luminance contrast is more significant than colour contrast and this method maximizes the luminance contrast over the whole range of colours obtainable. A disadvantage is that a coating design depends on the actual colours used but this is not a major drawback.

The chromaticities of the popular red, green and blue P22 phosphors was shown on the CIE chromaticity chart of Figure 7. The CIE coordinates are related to the CIE tristimulus functions by the formulae:—

$$x = X/(X + Y + Z)$$
$$Y = Y/(X + Y + Z)$$

From these relationships and from Grassman's Laws which show that separate X, Y and Z components are additive, it is possible to compute the photopic luminance ratios of the three primary colours to give a specific white.

4

This computes to:—

$$g = [(WZ - RZ)(WX - BX) - (WX - RX)(WZ - BZ)/[(WX - GX)(WZ - BZ) - (WZ - GZ)(WX - BX)]$$

and

$$b = [(WX - RX)(WZ - GZ) - (WZ - RZ)(WX - GX)]/[(WZ - BZ)(WX - GX) - (WX - BX)(WZ - GZ)]$$

where $WZ = (1 - x - y)/y$
$WX = x/y$

RZ, RX, BZ, BX, GX and GZ are derived from the primary colour chromaticities and g and b are the luminance ratios of the green and blue to red respectively to give the specified white chromaticities.
Typically, for P22 phosphors,

Red — x = 0,62, y = 0.35
Green — x = 0.29, Y = 0.60
Blue — x = 0,15, y = 0.07

The luminance ratios for two whites are:—

6500°K — x = 0,313,  y = 0.33
g/r = 2.63, b/r = 0.333
9,300°K — x = 0.285,  y = 0.295
g/r = 2.91, b/r = 0.51

This result can be used to define the reflection characteristic of a photopic coating which is balanced for the different phosphor luminance. Although the total photopic luminance is still the most important parameter across the whole of the visible spectrum, across segments of the spectrum the photopic reflection amplitudes can be made to match the luminance ratios of the phosphor primaries.
In the cases discussed above, this means that the photopic reflection in the blue region will be less than in the red region, which in turn is less than in the green.
We can translate this into an anti-reflection coating reflection characteristic in various ways. A graphical method is described below (for white of 6500°K colour temperature).

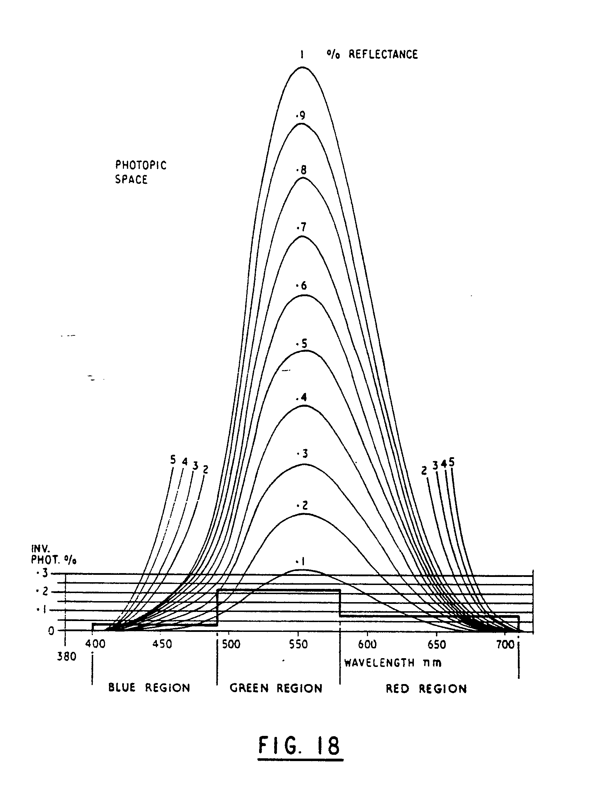

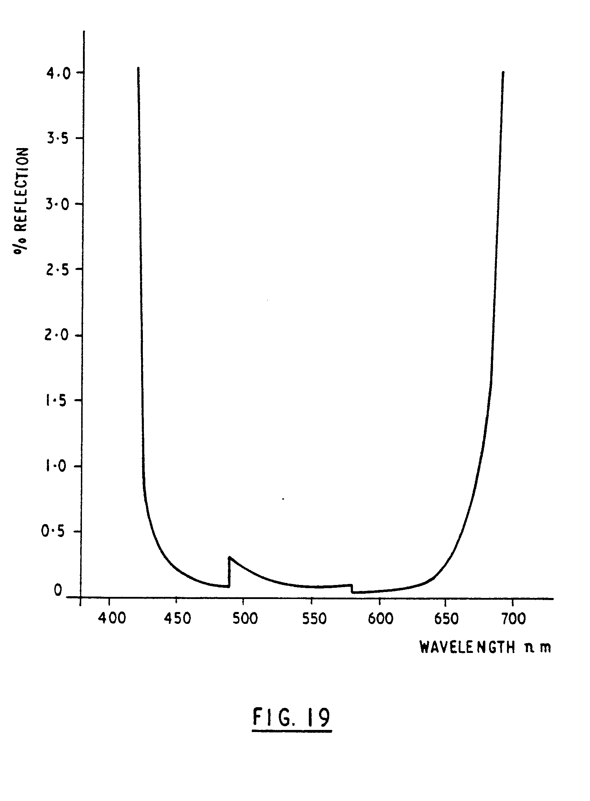

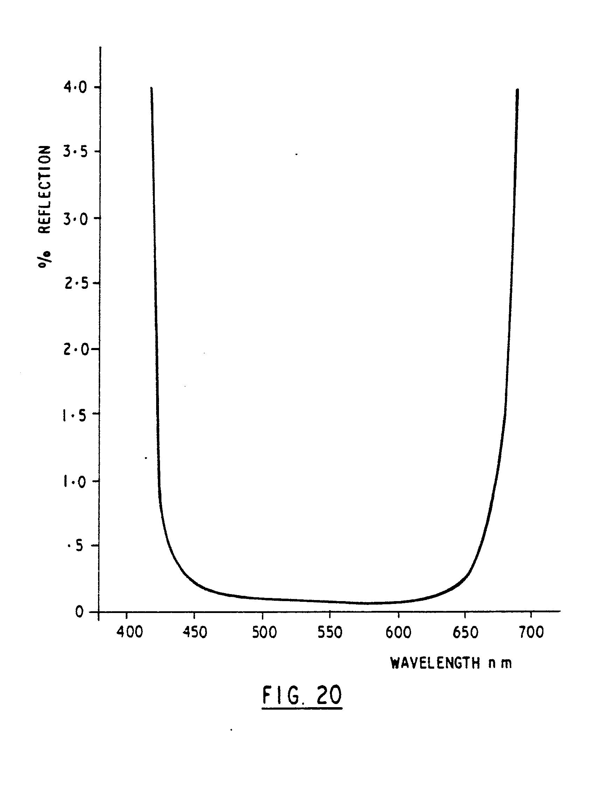

1. Split the spectrum into three wavebands (red, green, blue), and plot the reflection characteristic in photopic space, matching the appropriate luminance ratios as shown in Figure 18.
2. Translate this back into normal space as shown in Figure 19.
3. Smooth out the step changes to match real coating performance as shown in Figure 20.

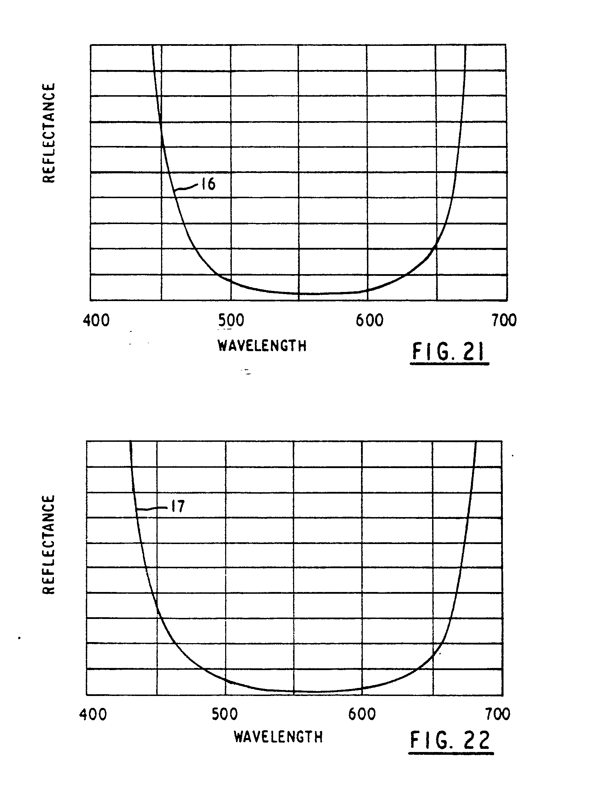

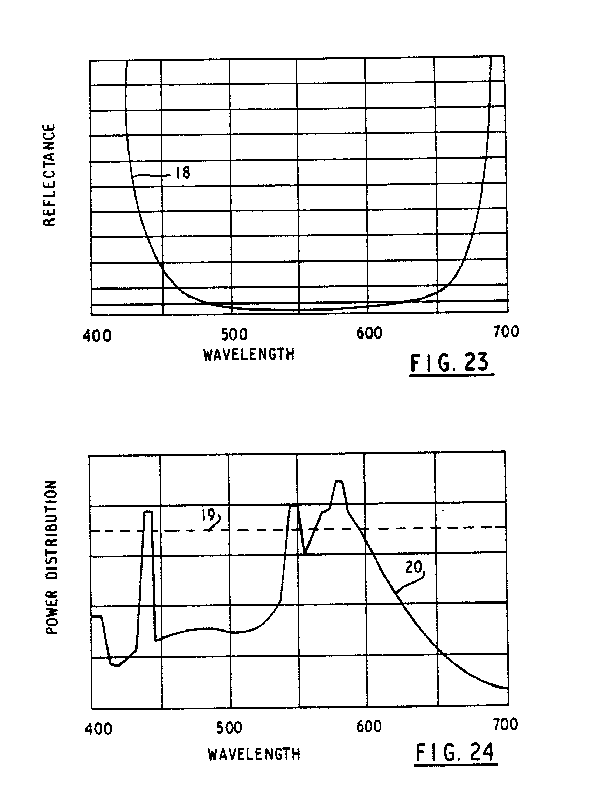

Figures 21 to 23 represent theoretical photometric reflectance curves for obtaining flat photopic reflectances of different values. Thus it will be seen that to obtain a flat photopic reflectance of 0.1%, 0.05% and 0.025% respectively, the photometric reflectance curves 16, 17 and 18 in Figures 21, 22 and 23 respectively are required. As the minimum value of the photometric reflectance decreases, the bandwidth increases. However in practice, the level of the central minimum is much more significant than the bandwidth effects. The curves of Figures 21 to 23 are derived on the basis of a flat light source that is a light source having a uniform power distribution across the visible spectrum. In practice however light sources have a somewhat different energy distribution and tend to be deficient in various regions of the spectrum. Figure 24 is a comparison of the energy distribution 20 of a cool white fluorescent light source with the energy distribution 19 of a flat source.

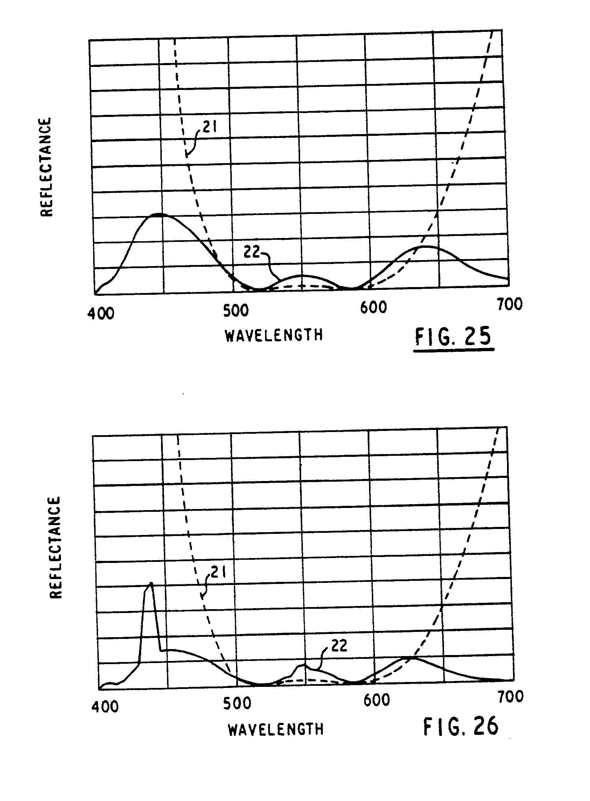

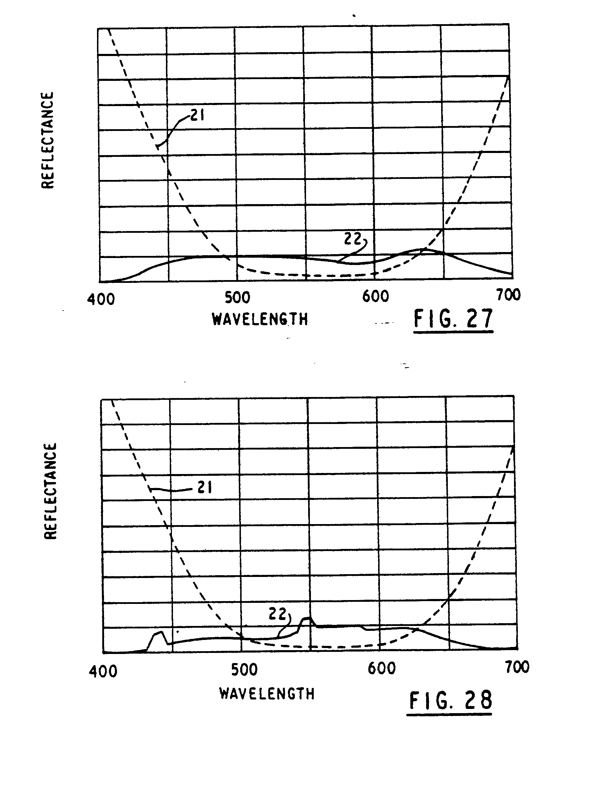

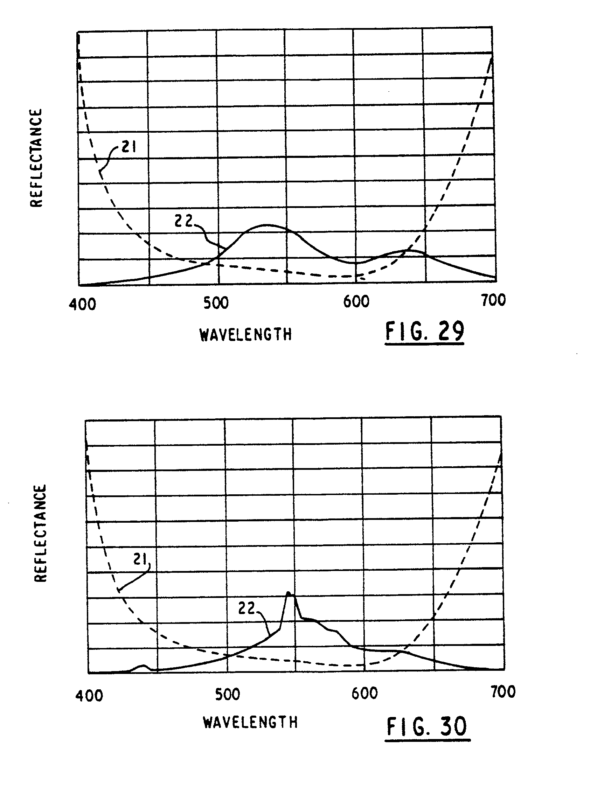

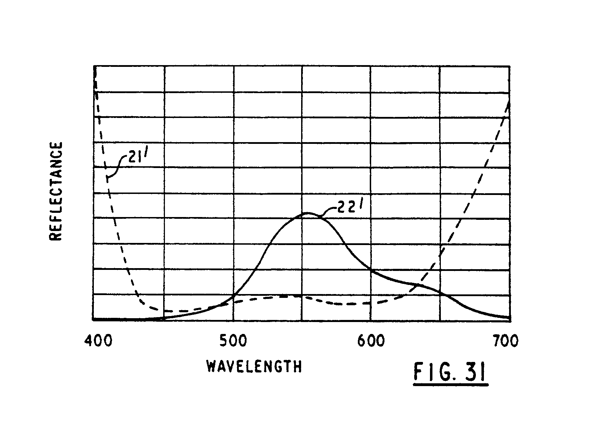

Figures 25 to 30 are plots showing the photometric and photopic reflectances for three designs of anti-reflection coatings for two different light sources. In each Figure, the dotted curve 21 represents the photometric reflectance whilst the solid curve 22 represents the photopic reflectance. Figures 25 and 26 represent the reflectance due to a flat source and a cool white fluorescent source respectively for a relatively narrow bandwidth anti-reflection coating. Figures 27 and 28 are corresponding curves for a relatively wide bandwidth anti-reflection coating. Figures 29 and 30 are corresponding views for a wide bandwidth coating but with a higher minimum value of the photometric reflectance: a comparison of Figures 29 and 30 with Figures 27 and 28 shows how the value of the minimum is more dominating than the effect of bandwidth (which can be seen by comparing Figures 25 and 26 with Figures 27 and 28). It will be appreciated that the brightness seen by the operator is represented by the area beneath the photopic curve 22: thus the peaks due to mercury lines at 430 and 550 nm are not very bright as seen by the operator. For comparison purposes, Figure 31 shows a corresponding chart for a standard coating (according to Figure 4) for a flat light source. Curve 21' represents the photometric reflectance whilst curve 22' represents the corresponding photopic reflectance.
What has been described is an improved, photopic, anti-reflection coating for a visual display unit in which use is made of the photopic response curve to reduce the perceived reflectance. Optionally,

5

consideration is also given to the nature of the ambient light sources so as to tailor the anti-reflection coating to a particular light source. Consideration may also be given to matching the reflectance characteristic to the chroma or colour of the particular phosphors used where the visual display unit is a colour cathode ray tube.

By use of the invention, very significant improvements in the perceived reflection characteristic, for example by factors of 2 or 4:1 or even up to an order of magnitude, may be obtained. It will be appreciated that the number of layers, their thicknesses, compositions and refractive indices are not limited to those described above. Any of the normal methods of deposition can be adjusted so that the photometric reflectance is of substantially inverse-photopic shape.

The invention may be used in any visual display unit in which an image is viewed on or behind a reflecting surface, for example a head-up display.

## Claims

1. A method of fabricating an anti-reflection coating on the front viewing surface of a visual display unit comprising locating the surface in a deposition apparatus and adjusting the operating parameters of the apparatus so as to deposit on the surface a plurality of layers having controlled thicknesses and refractive indices so that the reflectance from said front surface is reduced within the visible spectrum, characterised in that the operating parameters are adjusted so that the photometric reflectance has a substantially inverse-photopic shape with its minimum value occurring substantially at the frequency of the maxima of the photopic luminosity curve.

2. A modification of the method claimed in claim 1, in which the operating parameters are adjusted so that the minimum of the photometric reflectance is shifted towards the dominant wavelength of the anticipated ambient lighting within which the visual display unit is to be used.

3. A method as claimed in either preceding claim in which the visual display unit is a colour cathode ray tube and in which the operating parameters are adjusted so that the inverse-photopic shape of the photometric reflectance is adjusted to balance the anti-reflection coating to the photopic luminous emissions of the three different phosphors of the colour cathode ray tube.

4. A method as claimed in any preceding claim, in which the viewing surface is a glass panel of refractive index 1.52, comprising depositing a layer of silicon monoxide (SiO) of 1.70 refractive index to a thickness of substantially 82.4 nm on the front surface, a layer of cerium oxide ($CeO_2$) of 2.35 refractive index to a thickness of substantially 117 nm over the silicon monoxide layer, and a layer of magnesium fluoride ($MGF_2$) of 1.38 refractive index to a thickness of substantially 99.1 nm over the cerium oxide layer.

5. A visual display unit having a front viewing surface and an anti-reflection coating on the surface consisting of a plurality of layers of controlled refractive indices and thicknesses, characterised in that the coating has a photometric reflectance characteristic of substantially inverse-photopic shape with its minimum occurring substantially at the frequency of the maximum of the photopic luminosity curve.

6. A modification of a visual display unit as claimed in claim 5, in which the minimum of the photometric reflectance characteristic is shifted towards the dominant wavelength of the ambient lighting in which the visual display unit is to be used.

7. A visual display unit as claimed in either claim 5 or claim 6 in the form of a colour cathode ray tube, in which the photometric reflectance characteristic is adjusted to balance the coating with the photopic luminous emissions of the three phosphors of the colour cathode ray tube.

8. A visual display unit as claimed in any of claims 5 to 7, in which the anti-reflection coating is a multilayer coating formed on a glass surface or refractive index 1.52, the coating consisting of an inner layer of substantially 82.4 nm thickness of silicon monoxide (SiO) of refractive index 1.7, an intermediate layer of substantially 117 nm thickness of cerium dioxide ($CeO_2$) of refractive index 2.35, and an outer layer of substantially 99.1 nm thickness of magnesium fluoride ($MgF_2$) of refractive index 1.38.

9. A visual display unit as claimed in any of claims 5 to 8, in which the anti-reflection coating is provided on a glass panel located in front of the display device.

## Patentansprüche

1. Verfahren zum Herstellen einer Antireflexbeschichtung auf der vorderen Sichtoberfläche eines Bildschirmgerätes, bei dem die Oberfläche in ein Beschichtungsgerät eingebracht wird und die Betriebsparameter des Gerätes so eingestellt werden, daß auf der Oberfläche eine Vielzahl von Schichten abgeschieden wird, die eine gesteuerte Dicke und Brechungsindizes haben, so daß die Reflexion der vorderen Oberfläche innerhalb des sichtbaren Spektralbereiches reduziert ist, dadurch gekennzeichnet, daß die Betriebsparameter so eingestellt werden, daß der photometrische Reflexionsgrad im wesentlichen einen umgekehrten photopischen Verlauf aufweist, bei dem der Minimalwert im wesentlichen bei der Frequenz des Maximums der photopischen Helligkeitskurve liegt.

2. Abwandlung des Verfahrens nach Anspruch 1, bei dem die Betriebsparameter so eingestellt sind, daß das Minimum des photometrischen Reflexionsgrades in Richtung auf die vorherrschende Wellenlänge des erwarteten Umgebungslichtes verschoben ist, in dem das Bildschirmgerät verwendet werden soll.

3. Verfahren nach einem der vorstehenden Ansprüche, bei dem das Bildschirmgerät eine Farbbildröhre ist und bei dem die Betriebsparameter so eingestellt sind, daß der umgekehrt-photopische Kurvenverlauf des photometrischen Reflexionsgrades eingerichtet ist, um die Antireflexschicht der photopischen Lichtstrahlung der drei unterschiedlichen PHosphore der Fabbildröhre auszugleichen.

4. Verfahren nach einem der vorstehenden Ansprüche, bei dem die Sichtoberfläche eine Glasplatte mit einem Brechungsindex von 1,52 ist, wobei eine Schicht aus Siliziummonoxid (SiO) mit einem Brechungsindex von 1,70 bis auf eine Dicke von im wesentlichen 82,4 nm auf der vorderen Oberfläche, eine Schicht aus Zeroxid (CeO$_2$) mit einem Brechungsindex von 2,35 auf eine Dicke von im wesentlichen 117 nm auf die Siliziummoxidschicht und eine Schicht aus Magnesiumfluorid (MgF$_2$) mit einem Brechungsindex von 1,38 auf eine Dicke von im wesentlichen 99,1 nm auf der Zeroxidschicht abgeschieden wird.

5. Bildschirmgerät mit einer vorderen Sichtoberfläche und einer Antireflexbeschichtung auf der Oberfläche, die aus einer Vielzahl von Schichten mit gesteuerten Brechungsindizes und Dicken besteht, dadurch gekennzeichnet, daß die Beschichtung über eine photometrische Reflexionscharakteristik verfügt, die einen im wesentlichen inversen photopischen Kurvenverlauf aufweist, dessen Minimum im wesentlichen bei der Frequenz des Maximums der photopischen Helligkeitskurve liegt.

6. Abwandlung des Bildschirmgerätes nach Anspruch 5, bei dem das Minimum der photometrischen Reflexionscharakteristik in Richtung auf die vorherrschende Wellenlänge des Umgebungslichtes verschoben ist, in dem das Bildschirmgerät verwendet werden soll.

7. Bildschirmgerät nach Anspruch 5 oder Anspruch 6 in Gestalt einer Farbbildröhre, bei der die photometrische Reflexionscharakteristik eingestellt ist, um die Beschichtung mit der photopischen Lichtausstrahlung der drei Phosphore der Farbbildröhre auszugleichen.

8. Bildschirmgerät nach einem der Ansprüche 5 bis 7, bei dem die Antireflexbeschichtung eine auf einer Glasoberfläche mit einem Brechungsindex 1,52 ausgebildete Mehrlagenbeschichtung ist, wobei die Beschichtung aus einer inneren Lage aus Siliziummonoxid (SiO) mit einer Dicke von im wesentlichen 82,4 nm und einem Brechungsindex von 1,7, aus einer Zwischenlage aus Zeroxid (CeO$_2$) mit einer Dicke von im wesentlichen 117 nm und einem Brechungsindex von 2,35 sowie aus einer äußeren Lage aus Magnesiumfluorid (MgF$_2$) mit einer Dicke von im wesentlichen 99,1 nm und einem Brechungsindex von 1,38 besteht.

9. Bildschirmgerät nach einem der Ansprüche 5 bis 8, bei dem die Antireflexbeschichtung auf einer Glasplatte vorgesehen ist, die vor dem Anzeigegerät angeordnet ist.

**Revendications**

1. Procédé de fabrication d'un revêtement anti-réfléchissant sur la face d'observation avant d'un dispositif d'affichage, comprenant la mise en place de la surface dans un appareil de formation de dépôt et le réglage des paramètres de fonctionnement de l'appareil de manière à déposer sur la surface une pluralité de couches ayant des épaisseurs et des indices de réfraction déterminés de sorte que la réflectance par ladite surface avant est réduite à l'intérieur du spectre visible, caractérisé en ce que les paramètres de fonctionnement sont réglés de façon à ce que le réflectance photométrique ait une configuration sensiblement photopique inverse, dont la valeur minimale se trouve sensiblement à la fréquence des valeurs maximales de la courbe de luminosité photopique.

2. Modification du procédé suivant la revendication 1, dans laquelle les paramètres de fonctionnement sont réglés de sorte que le minimum de la réflectance photométrique est décalé vers la longueur d'onde dominante de l'éclairage ambiant prévu à l'intérieur duquel le dispositif d'affichage doit être utilisé.

3. Procédé suivant l'une quelconque des revendications précédentes, dans lequel le dispositif d'affichage est un tube à rayons cathodiques en couleur et dans lequel les paramètres de fonctionnement sont réglés de sorte que la configuration photopique inverse de la réflectance photométrique est ajustée pour équilibrer le revêtement anti-réfléchissant avec les émissions lumineuses photopiques des trois luminophores différents du tube à rayons cathodiques en couleur.

4. Procédé suivant l'une quelconque des revendications précédentes, dans lequel la surface d'observation est un panneau en verre d'indice de réfraction 1,52, comprenant le dépôt d'une couche de monoxyde de silicium (SiO) d'indice de réfraction 1,70 à une épaisseur de 82,4 nm environ sur la surface avant, d'une couche d'oxyde de cérium (CeO$_2$) d'indice de réfraction 2,35 à une épaisseur de 117 nm environ sur la couche de monoxyde de silicium, et d'une couche de fluorure de magnésium (MgF$_2$) d'indice de réfraction 1,38 à une épaisseur de 99,1 nm environ sur la couche d'oxyde de cérium.

5. Dispositif d'affichage comportant une surface d'observation avant et un revêtement antiréfléchissant appliqué sur la surface et composé d'une pluralité de couches d'épaisseurs et d'indices de réfraction déterminés, caractérisé en ce que le revêtement possède une caractérique de réflectance photométrique qui a une configuration sensiblement photopique inverse dont le minimum se trouve sensiblement à la fréquence du maximum de la courbe de luminosité photopique.

6. Modification d'un affichage visuel suivant la revendication 5, dans laquelle le minimum de la caractéristique de réflectance photométrique est décalé vers la longueur d'onde dominante de l'éclairage ambiant dans lequel le dispositif d'affichage doit être utilisé.

7. Dispositif d'affichage suivant la revendication 5 ou la revendication 6 sous la forme d'un tube à rayons cathodiques en couleur, dans lequel la caractéristique de réflectance photométrique est réglée de manière à équilibrer le revêtement avec les émissions lumineuses photopiques des trois luminophores du tube à rayons cathodiques en couleur.

8. Dispositif d'affichage suivant l'une quelconque des revendications 5 à 7, dans lequel le revêtement antiréfléchissant est un revêtement multicouche formé sur une surface en verre d'indice de réfraction 1,52, le revêtement comprenant une couche intérieure de monoxyde de silicium (SiO) d'une épaisseur de 82,4 nm environ et d'indice de réfraction 1,7, une couche intermédiaire de dioxyde de cérium (CeO$_2$) d'une épaisseur de 117 nm environ et d'indice de réfraction 2,35, et une couche extérieure de fluorure de magnésium (MgF$_2$) d'une épaisseur de 99,1 nm environ et d'indice de réfraction 1,38.

9. Affichage visuel suivant l'une quelconque des revendications 5 à 8, dans lequel le revêtement antiréfléchissant est prévu sur un panneau en verre placé à l'avant du dispositif d'affichage.

FIG. 1

FIG. 2

FIG. 3

FIG. 4

FIG. 5

0 112 418

FIG. 6

FIG. 8

FIG. 7

FIG. 9

FIG. 10

FIG. 11

0 112 418

FIG. 12

FIG. 13

8

FIG.14

FIG. 15

FIG. 16

11

FIG. 17

FIG. 18

FIG. 19

FIG. 20

REFLECTANCE

16

400          500          600          700
WAVELENGTH

FIG. 21

REFLECTANCE

17

400          500          600          700
WAVELENGTH

FIG. 22

REFLECTANCE

18

400    500    600    700
WAVELENGTH

FIG. 23

POWER DISTRIBUTION

19

20

400    500    600    700
WAVELENGTH

FIG. 24

FIG. 25

FIG. 26

FIG. 27

FIG. 28

FIG. 29

FIG. 30

FIG. 31